# EUROPEAN PATENT APPLICATION

(11) **EP 4 521 531 A1**
(43) Date of publication of application: **12.03.2025**
(21) Application number: 22969837.8
(22) Date of filing: 30.12.2022
(51) Int. Cl.: H01M 50/244, H01M 50/204, H01M 50/249

(54) **BATTERY AND ELECTRIC DEVICE**

(71) Applicant: Contemporary Amperex Technology (Hong Kong) Limited, Hong Kong (HK)
(72) Inventor: WANG, Zhi, Ningde City, Fujian 352100 (CN); SHI, Weigang, Ningde City, Fujian 352100 (CN); WU, Guangdang, Ningde City, Fujian 352100 (CN); SHI, Si, Ningde City, Fujian 352100 (CN)
(74) Representative: Kraus & Lederer PartGmbB
(86) International application number: PCT/CN2022/144191
(87) International publication number: WO 2024/138695

(57) **Abstract**

The present application discloses a battery and a power consuming device. The battery includes: a battery cell; a first case body including a first end wall and a first side wall; and a second case body, the second case body and the first case body being connected to each other to jointly enclose a closed space for receiving the battery cell, the second case body including a second end wall, the second end wall being arranged opposite to the first end wall in a first direction, the second end wall having a first side face in a second direction, and the first direction intersecting with the second direction; wherein the first side wall has one end connected to the first end wall and the other end connected to the first side face. According to the technical solution provided by the present application, the energy density of the battery can be increased.

## Description

### Technical Field

The present application relates to the technical field of batteries, and in particular, to a battery and a power consuming device.

### Background Art

Achieving energy conservation and emission reduction is the key to the sustainable development of the automotive industry. Electric vehicles have become an important part of the sustainable development of the automotive industry due to their advantages in energy conservation and environmental protection. For the electric vehicles, the battery technology is an important factor to their development.

In the development of battery technology, how to increase the energy density of the batteries is an urgent technical problem to be solved in the battery technology.

### Summary of the Invention

The present application provides a battery and a power consuming device, which can increase the energy density of the battery.

The present application is implemented through technical solutions as follows.

In a first aspect, the present application provides a battery, comprising: a battery cell; a first case body comprising a first end wall and a first side wall; and a second case body, the second case body and the first case body being connected to each other to jointly enclose a closed space for receiving the battery cell, the second case body comprising a second end wall, the second end wall being arranged opposite to the first end wall in a first direction, the second end wall having a first side face in a second direction, and the first direction intersecting with the second direction; wherein the first side wall has one end connected to the first end wall and the other end connected to the first side face.

In the above solution, by connecting one end of the first side wall of the first case body to the first side face of the second end wall to implement the connection between the first case body and the second case body, it is possible to implement the connection between the first case body and the second case body without the need for providing flange structures protruding in the second direction, thereby improving the space utilization of the battery in the second direction to receive more battery cells or reduce the volume of the battery, and thus increasing the volumetric energy density of the battery.

According to some embodiments of the present application, an inner surface of the first side wall is connected to the first side face.

In the above solution, by connecting the inner surface of the first side wall, that is, the surface facing the first side face, to the first side face, a dimension of the battery in the second direction can be effectively reduced to increase the volumetric energy density of the battery as much as possible.

According to some embodiments of the present application, the second end wall has a first surface facing the first end wall, and one end of the first side wall that is away from the first end wall extends beyond the first surface in a direction from the first end wall to the second end wall.

In the above solution, the end of the first side wall that is away from the first end plate extending beyond the first surface can implement the direct connection between the first side wall and the first side face, so that the assembly difficulty and the manufacturing cost caused by the indirect connection between the first side wall and the first side face via an intermediate connecting member can be effectively reduced. In addition, the inner surface of the part of the first end wall that extends beyond the first surface can be connected to the first side face, so that the dimension of the battery in the second direction can be effectively reduced to increase the volumetric energy density of the battery as much as possible.

According to some embodiments of the present application, the second end wall has a second surface facing away from the first end wall, and the end of the first side wall that is away from the first end wall does not extend beyond the second surface in the direction from the first end wall to the second end wall.

In the above solution, the end of the first side wall that is away from the first end wall does not extend beyond the second surface, so that a dimension of the battery in the first direction is controlled, ensuring that the battery has a higher volumetric energy density.

According to some embodiments of the present application, the first case body has a material density less than that of the second case body.

In the above solution, since the connection between the first side wall and the first side face enables the proportion of the first case body in the battery to be increased, and the material density of the first case body is less than that of the second case body, the density of the battery is reduced, and the weight of the battery with the same volume is reduced, thereby increasing the gravimetric energy density of the battery.

According to some embodiments of the present application, the first case body is made of a plastic material, and the second case body is made of an aluminum alloy material.

In the above solution, the first case body may be an upper case body of the battery, the second case body may be a lower case body of the battery, and the second case body is made of an aluminum alloy material, so that the second case body has a higher structural strength and rigidity, and has a higher protective effect on the battery cell. The first case body serves as the upper case body to enclose the battery cell between the upper and lower case bodies. The first case body made of plastic can effectively reduce the manufacturing cost of the battery, and can effectively reduce the weight of the battery to increase the gravimetric energy density of the battery.

According to some embodiments of the present application, the battery further comprises a first fastener via which the first side wall is connected to the first side face.

In the above solution, the first fastener is provided for connecting the first side wall to the first side face, so that there is a higher connection stability between the first side wall and the first side face, thereby improving the structural stability of the battery.

According to some embodiments of the present application, the first side wall is provided with a first through hole, the first side face is provided with a first threaded hole, and the first fastener passes through the first through hole and is connected to the first threaded hole.

In the above solution, the first fastener may be a connecting component with external threads such as a bolt and a screw, which can be effectively connected in the first threaded hole, so that the connection stability between the first side wall and the first side face is improved, and there is a good sealing between the first side wall and the first side face.

According to some embodiments of the present application, the battery further comprises a first sealing member arranged between the first side wall and the first side face.

In the above solution, by arranging the first sealing member before the first side wall and the first side face, the sealing between the first side wall and the first side face can be improved, thereby improving the sealing performance of the battery.

According to some embodiments of the present application, there are two first side walls, which are arranged opposite to each other in the second direction; the second end wall is located between the two first side walls, and the second end wall has two first side faces arranged opposite to each other in the second direction; and the first side faces correspond to the first side walls on a one-to-one basis.

In the above solution, there are two first side walls, which are arranged opposite to each other in the second direction and respectively connected to the corresponding first side faces, so that the space utilization of the battery in the second direction can be effectively improved, thereby increasing the volumetric energy density of the battery.

According to some embodiments of the present application, the second case body further comprises two second side walls, the two second side walls are arranged opposite to each other in the second direction and connected to the second end wall, and the battery cell is arranged between the two second side walls.

In the above solution, two opposite second side walls are arranged on the second end wall in the second direction, so that the structural strength of the second case body can be improved, and a mounting region can be defined for the battery cell such that the battery cell is stably assembled in the second case body. Moreover, since the second side wall protrudes from the surface of the second end wall, when the battery cell is bonded to the second case body via an adhesive, the adhesive overflow space can be effectively controlled, and the risk of waste and environmental pollution caused by adhesive overflow can be reduced.

According to some embodiments of the present application, openings are respectively formed at two ends of the first case body in a third direction; the second case body further comprises two third side walls, the two third side walls are arranged opposite to each other in the third direction and connected to the second end wall, and the two third side walls respectively close the two openings; and the first direction, the second direction and the third direction intersect with one another.

In the above solution, by providing the third side walls, components such as explosion-proof valves, water-cooled connectors or high- and low-voltage connectors may be mounted on the third side walls to ensure normal charging and discharging operations of the battery. In addition, compared with the arrangement of flange structures, which protrude in the third direction, between the first case body and the second case body, the arrangement of the third side walls to close the openings can improve the space utilization of the battery in the third direction, thereby increasing the volumetric energy density of the battery.

According to some embodiments of the present application, the third side walls each comprise a third surface facing the closed space, a fourth surface facing away from the closed space, and a second side face connected to the third surface and the fourth surface; and the first case body comprises two connecting portions respectively located at the two ends of the first case body in the third direction, the connecting portions surround the openings, and the connecting portions are connected to the second side faces.

In the above solution, by providing the connecting portions connected to the second side faces of the third side walls, the connection stability and sealing between the first case body and the second case body can be ensured.

According to some embodiments of the present application, the second side faces each comprises a first flat face, second flat faces and transition faces, wherein the first flat face is arranged at one end of the third side wall that faces away from the second end wall, the two second flat faces are respectively arranged at two ends of the third side wall in the second direction, and the transition faces connect the first flat face to the second flat faces, such that the first flat face smoothly transitions to the second flat faces.

In the above solution, the first flat face and the second flat faces are non-coplanar surfaces. For this reason, the provision of transition faces to allow the first flat face to smoothly transition to the second flat faces can contribute to forming good sealing faces between the connecting portions and the second side faces, so that the battery has a higher sealing performance.

According to some embodiments of the present application, the second flat faces are flush with the first side faces.

In the above solution, the second flat faces are flush with the first side faces, so that it is possible to reduce the risk of generating gaps between the first side walls and the second side faces, and reduce the risk of generating gaps between the connecting portions and the second flat faces, thereby improving the sealing performance of the battery.

According to some embodiments of the present application, the first case body further comprises a fourth side wall adjacent to the first side wall; and one end of the fourth side wall is connected to the first end wall, the respective connecting portion is arranged at the other end of the fourth side wall, and the connecting portion protrudes from fourth side wall in a direction facing away from the closed space.

In the above solution, the first case body may be an upper case body, and the second case body may be a lower case body. In the manufacturing process of the battery, the material cost and the density of the upper case body may be lower than those of the lower case body. For this reason, the fourth side wall is provided to increase the proportion of the first case body in the battery, thereby effectively reducing the manufacturing cost of the battery and increasing the gravimetric energy density of the battery.

According to some embodiments of the present application, the battery further comprises second fasteners via which the connecting portions are connected to the second side faces.

In the above solution, the second fasteners are provided to connect the second side faces to the connecting portions to improve the connection stability between the connecting portions and the second side faces, thereby improving the structural stability of the battery.

According to some embodiments of the present application, the connecting portions are each provided with a second through hole, the second side faces are each provided with a second threaded hole, and the second fasteners pass through the second through holes and are connected to the second threaded holes.

In the above solution, the second fasteners may be connecting components with external threads such as bolts and screws, which can be effectively connected in the second threaded holes, so that the connection stability between the connecting portions and the second side faces is improved, and there is a good sealing between the connecting portions and the second side faces.

According to some embodiments of the present application, the battery further comprises second sealing members arranged between the connecting portions and the second side faces.

In the above solution, by arranging the second sealing members between the connecting portions and the second side faces, the sealing between the connecting portions wall and the second side faces can be improved, thereby improving the sealing performance of the battery.

According to some embodiments of the present application, the battery further comprises a first sealing member arranged between the first side wall and the first side face; wherein two ends of the first sealing member are respectively connected to the two second sealing members.

In the above solution, the first sealing member and the second sealing members may be integrally formed or may be separately connected to each other. By providing the first sealing member and the second sealing members, a good sealing can be achieved between the first case body and the second case body, thereby improving the safety of the battery.

According to some embodiments of the present application, a dimension of one of the third side walls in the first direction is less than a dimension of the other third side wall in the first direction.

In the above solution, components such as explosion-proof valves, water-cooled connectors or high- and low-voltage connectors may be mounted on the third side wall having a larger size to ensure normal charging and discharging operations of the battery. The size of the other third side wall is reduced, so that it is possible to adaptively increase the size of a portion of the first case body that corresponds to the third side wall, and increase the proportion of the first case body in the battery (in this embodiment, the first case body may be an upper case body having a relatively low material cost and density), thereby reducing the manufacturing cost of the battery and increasing the gravimetric energy density of the battery.

According to some embodiments of the present application, the second end wall is provided with a securing portion for securing the battery to a power consuming device.

In the above solution, the securing portion is provided on the second end wall to implement stable assembly of the battery, ensuring that the battery supplies electric energy.

In a second aspect, the present application also provides a power consuming device, including a battery as described in any of the solutions in the first aspect, the battery being configured to supply electric energy.

The above description is only an overview of the technical solutions of the present application. To more clearly understand the technical means of the present application to implement same according to the contents of the description, and to make the above and other objectives, features, and advantages of the present application more obvious and understandable, specific implementations of the present application are exemplarily described below.

### Brief Description of the Drawings

In order to more clearly describe the technical solutions of embodiments of the present application, the accompanying drawings required in the embodiments will be described briefly below. It should be understood that the following accompanying drawings illustrate only some embodiments of the present application and therefore should not be construed as a limitation on the scope thereof. For those of ordinary skill in the art, other relevant accompanying drawings can also be obtained from these accompanying drawings without any inventive effort.
FIG. 1 is a schematic diagram of a vehicle according to some embodiments of the present application;
FIG. 2 is a schematic diagram of a battery according to some embodiments of the present application;
FIG. 3 is an exploded perspective view of a battery according to some embodiments of the present application;
FIG. 4 is a schematic diagram of a first case body according to some embodiments of the present application;
FIG. 5 is a schematic diagram of a second case body according to some embodiments of the present application;
FIG. 6 is an enlarged view of part A in FIG. 5;
FIG. 7 is a partial schematic diagram of a first case body according to some embodiments of the present application;
FIG. 8 is a schematic diagram of a third side wall according to some embodiments of the present application;
FIG. 9 is a partial schematic diagram of a first case body according to some other embodiments of the present application;
FIG. 10 is a partial schematic diagram of a second case body according to some other embodiments of the present application; and
FIG. 11 is a schematic diagram of a second case body according to some other embodiments of the present application.

List of reference signs: 100 - Battery; 1000 - Vehicle; 200 - Controller; 300 - Motor; 10 - First case body; 11 - First end wall; 12 - First side wall; 120 - First through hole; 13 - Opening; 14 - Connecting portion; 140 - Second through hole; 15- Fourth side wall; 20 - Second case body; 21 - Second end wall; 210 - First side face; 2100 - First threaded hole; 211 - First surface; 212 - Second surface; 22 - Second side wall; 23 - Third side wall; 230 - Third surface; 231 - Fourth surface; 232- Second side face; 2320 - First flat face; 2321 - Second flat face; 2322 - Transition face; 2323 - Second threaded hole; 24 - Crossbeam; 30-First sealing member; 31- Second sealing member; 40 - Securing portion; z - First direction; x - Second direction; y - Third direction.

### Detailed Description of Embodiments

The implementations of the present application will be further described in detail below in conjunction with the accompanying drawings and embodiments. The following detailed description of the embodiments and the accompanying drawings are used to illustrate the principle of the present application by way of example and are not intended to limit the scope of the present application. That is, the present application is not limited to the described embodiments.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "include/comprise" and "has/have" and any variations thereof in the description and the claims of the present application as well as the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist. For example, A and/or B may include: only A exists, both A and B exist, and only B exists. In addition, the character "/" herein generally indicates an "or" relationship between the associated objects.

In the description of the embodiments of the present application, the term "a plurality of" refers to two or more, and similarly, "a plurality of groups" refers to two or more groups and "a plurality of pieces" refers to two or more pieces.

In the description of the embodiments of the present application, the orientation or positional relationship indicated by the technical terms "length", "width", "thickness", "upper", "lower", etc. are based on the orientation or positional relationship shown in the accompanying drawings, only for the convenience of describing the embodiments of the present application and simplifying the description, instead of indicating or implying that the indicated device or element necessarily has a specific orientation and is constructed and operated in a specific orientation, and therefore, the orientation or positional relationship cannot be understood as a limitation to the embodiments of the present application.

In the description of the embodiments of the present application, unless otherwise explicitly specified and defined, the technical terms such as "mounting", "connecting", "connection" and "fixing" should be understood in a broad sense, for example, they may be a fixed connection, a detachable connection, or an integrated connection; may be a mechanical connection or an electric connection; and may be a direct connection or an indirect connection by means of an intermediate medium, or may be communication between interiors of two elements or interaction between the two elements. For those of ordinary skill in the art, the specific meanings of the above terms in the embodiments of the present application can be understood according to specific situations.

A battery mentioned in the embodiments of the present application refers to a single physical module including one or more battery cells to provide a higher voltage and capacity. For example, the battery mentioned in the present application may include one or more battery cells. The battery further includes a first case body and a second case body. The first case body and the second case body are connected to each other to jointly enclose a closed space. The battery cell is arranged in the closed space to prevent liquid or other foreign matter from affecting the charging or discharging of the battery cell.

In the development of battery technology, how to increase the energy density of the batteries is an urgent technical problem to be solved in the battery technology. The inventors have found that currently edges of the first case body and the second case body of the battery are both provided with flange structures protruding toward the outside of the battery, and the first case body and the second case body are connected to each other via the flange structures to achieve sealing connection, but the protruding flange structures will occupy additional space, resulting in low space utilization of the battery and affecting the volumetric energy density of the battery.

In view of this, in order to solve the problem of the protruding flange structures occupying additional space, resulting in low space utilization of the battery and affecting the battery energy density, the inventors have designed a battery through in-depth research. The battery includes a first case body and a second case body. The first case body includes a first end wall and a first side wall. The second case body includes a second end wall, the second end wall is arranged opposite to the first end wall in a first direction, the second end wall has a first side face in a second direction, and the first direction intersects with the second direction. The first side face of the first case body is connected to the first side face of the second end wall.

In the above solution, the outwardly-protruding flange structures are omitted from the battery, so that the connection between the first side wall and the first side face enables the space wasted by the flange structures to be saved, improving the space utilization of the battery in the second direction to receive more battery cells or reduce the size of the battery, thereby increasing the volumetric energy density of the battery.

The battery disclosed in the embodiments of the present application may be, but is not limited to, used in a battery cabinet, a container-type energy storage device, etc. The energy storage device may include a plurality of batteries disclosed in the present application.

The battery disclosed in the embodiments of the present application may be used in, but not limited to, a power consuming apparatus, such as a vehicle, a ship, or an aircraft. A power supply system of the power consuming apparatus may be composed of a battery disclosed in the present application.

The embodiments of the present application provide a power consuming device using a battery as a power supply. The power consuming device may be, but not limited to, a cell phone, a tablet, a laptop, an electric toy, an electric tool, an electric bicycle, an electric motorcycle, an electric vehicle, a ship, a heavy truck, a bus, a spacecraft, etc. The electric toy may include a stationary or mobile electric toy, such as a game console, an electric vehicle toy, an electric ship toy and an electric airplane toy. The spacecraft may include an airplane, a rocket, a space shuttle, a spaceship, etc.

For ease of description of the following embodiments, an example in which a power consuming device according to an embodiment of the present application is a vehicle 1000 is taken for description.

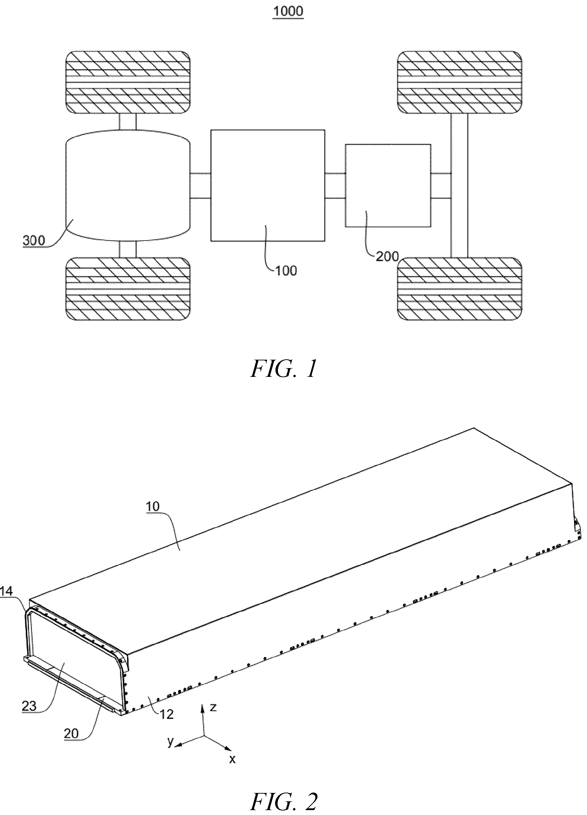

Referring to FIG. 1, FIG. 1 is a schematic diagram of a vehicle according to some embodiments of the present application. The vehicle 1000 may be a fuel vehicle, a gas vehicle or a new energy vehicle. The new energy vehicle may be a battery electric vehicle, a hybrid electric vehicle, an extended-range vehicle, etc. The type of the vehicle 1000 may be a car, an off-road vehicle, a heavy truck, a bus, etc. A battery 100 is provided inside the vehicle 1000, and the battery 100 may be arranged at the bottom, the front or the back of the vehicle 1000. The battery 100 may be configured to supply power to the vehicle 1000. For example, the battery 100 can serve as an operating power supply of the vehicle 1000 for use in a circuit system of the vehicle 1000, for example, to meet a working power demand of the vehicle 1000 during startup, navigation and running.

The vehicle 1000 may further include a controller 200 and a motor 300. The controller 200 is configured to control the battery 100 to supply power to the motor 300, for example, to meet working power requirements during starting, navigation and traveling of the vehicle 1000.

In some embodiments of the present application, the battery 100 may not only serve as an operating power supply for the vehicle 1000, but also serve as a driving power supply for the vehicle 1000, in place of or partially in place of fuel or natural gas, to supply driving power to the vehicle 1000.

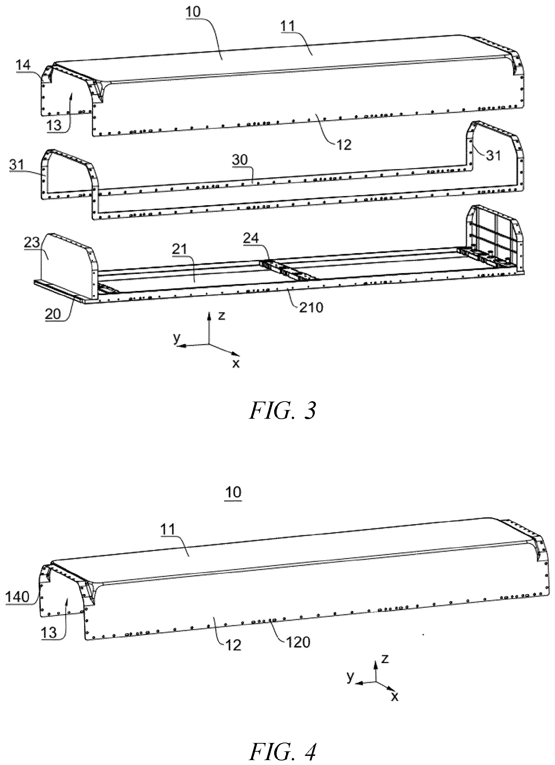

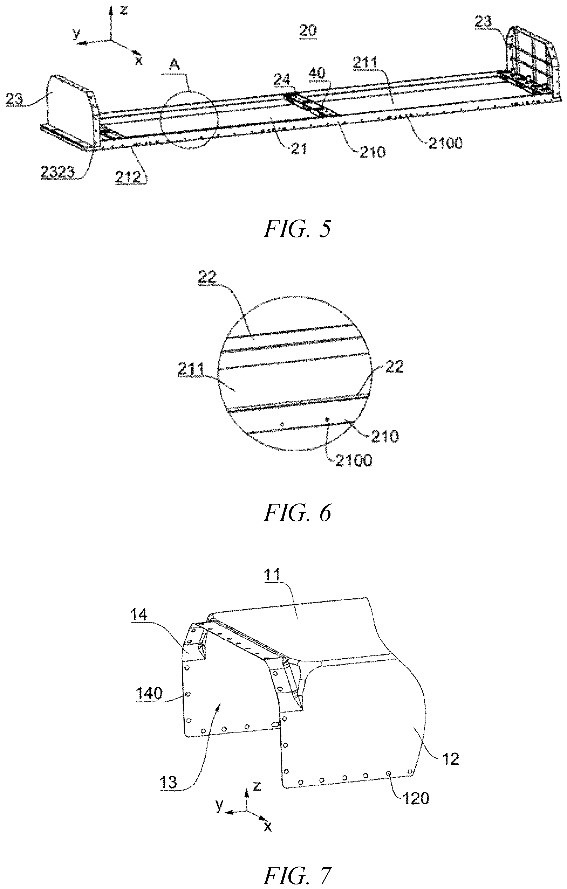

According to some embodiments of the present application, the present application provides a battery 100. Referring to FIGS. 2-6, FIG. 2 is a schematic diagram of a battery according to some embodiments of the present application; FIG. 3 is an exploded perspective view of a battery 100 according to some embodiments of the present application; FIG. 4 is a schematic diagram of a first case body 10 according to some embodiments of the present application; FIG. 5 is a schematic diagram of a second case body 20 according to some embodiments of the present application; and FIG. 6 is an enlarged view of part A in FIG. 5.

The battery 100 includes a battery cell (not shown), a first case body 10 and a second case body 20. The first case body 10 includes a first end wall 11 and a first side wall 12. The second case body 20 and the first case body 10 are connected to each other to jointly enclose a closed space for receiving the battery cell, the second case body 20 includes a second end wall 21, the second end wall 21 is arranged opposite to the first end wall 11 in a first direction z, the second end wall 21 has a first side face 210 in a second direction x, and the first direction z intersects with the second direction x. The first side wall 12 has one end connected to the first end wall 11 and the other end connected to the first side face 210.

In some embodiments, the first case body 10 may be regarded as an upper case body of the battery 100, the first end wall 11 may be regarded as a top wall of the battery 100, and the first side wall 12 may be a portion which has one end connected to the first end wall 11 and is not in the same plane as the first end wall 11. The first side wall 12 may be connected to the first end wall 11 by welding or bonding.

The second case body 20 may be regarded as a lower case body of the battery 100, the second end wall 21 may be regarded as a bottom wall of the battery 100, and the first direction z may be a height direction of the battery 100. That is, the top wall is arranged opposite to the bottom wall in the height direction of the battery 100, and the first side face 210 may be a surface of the bottom wall in the second direction x. The first case body 10 and the second case body 20 are connected to each other to form a closed space capable of receiving the battery cell.

The intersection between the first direction z and the second direction x may mean that the first direction z and the second direction x are not parallel to each other. Correspondingly, the first side face 210 can be understood as a surface of the second end wall 21 that does not face or face away from the first end wall 11.

By "the first side wall 12 has one end connected to the first end wall 11 and the other end connected to the first side face 210", it may be meant that the first side wall 12 connects the first end wall 11 and the second end wall 21 to each other, and the end of the first side wall 12 that is away from the first end wall 11 is directly or indirectly connected to the first side face 210. It can be understood that a connecting face between the first side wall 12 and the first end wall 11 is located on the first side face 210 but does not protrude from the outer contours of the first case body 10 and the second case body 20 in the second direction x. By "the end of the first side wall 12 that is away from the first end wall 11 is directly or indirectly connected to the first side face 210", it may be meant that the first side wall 12 is directly connected to the first side face 210, or the first side wall 12 is indirectly connected to the first side face 210 via an intermediate connecting member.

In the above solution, by connecting one end of the first side wall 12 of the first case body 10 to the first side face 210 of the second end wall 21 to implement the connection between the first case body 10 and the second case body 20, it is possible to implement the connection between the first case body 10 and the second case body 20 without the need for providing flange structures protruding in the second direction x, thereby improving the space utilization of the battery 100 in the second direction x to receive more battery cells or reduce the volume of the battery, and thus increasing the volumetric energy density of the battery 100.

According to some embodiments of the present application, an inner surface of the first side wall 12 is connected to the first side face 210.

The inner surface of the first side wall 12 may refer to a surface of the first side wall 12 facing the inside of the battery 100. By "the inner surface of the first side wall 12 is connected to the first side face 210", it may be meant that the connection relationship between the inner surface of the first side wall 12 and the first side face 210 is face-to-face connection.

In the above solution, by connecting the inner surface of the first side wall 12, that is, the surface facing the first side face 210, to the first side face 210, a dimension of the battery 100 in the second direction x can be effectively reduced to increase the volumetric energy density of the battery 100 as much as possible.

According to some embodiments of the present application, as shown in FIGS. 5 and 6, the second end wall 21 has a first surface 211 facing the first end wall 11, and one end of the first side wall 12 that is away from the first end wall 11 extends beyond the first surface 211 in a direction from the first end wall 11 to the second end wall 21.

The second end wall 21 has a first surface 211 in the first direction z, and the first surface 211 is a surface of the second end wall 21 facing the first end wall 11. The first surface 211 may be regarded as an upper surface of the second end wall 21. In some embodiments, the battery cell is located between the first surface 211 and the first end wall 11.

By "one end of the first side wall 12 that is away from the first end wall 11 extends beyond the first surface 211 in a direction from the first end wall 11 to the second end wall 21", it may be meant that the orthographic projection the first side wall 12 on a plane where the first side face 210 is located overlaps with the first side face 210, and the overlapping portion between the first side wall 12 and the first side face 210 may be the portion where the first side wall 12 and the first side face 210 are connected to each other.

In the above solution, the end of the first side wall 12 that is away from the first end plate extending beyond the first surface 211 can implement the direct connection between the first side wall 12 and the first side face 210, so that the assembly difficulty and the manufacturing cost caused by the indirect connection between the first side wall 12 and the first side face 210 via the intermediate connecting member can be effectively reduced. In addition, the inner surface of the part of the first end wall 11 that extends beyond the first surface 211 can be connected to the first side face 210, so that the dimension of the battery 100 in the second direction x can be effectively reduced to increase the volumetric energy density of the battery 100 as much as possible.

According to some embodiments of the present application, as shown in FIGS. 5 and 6, the second end wall 21 has a second surface 212 facing away from the first end wall 11, and the end of the first side wall 12 that is away from the first end wall 11 does not extend beyond the second surface 212 in the direction from the first end wall 11 to the second end wall 21.

The second end wall 21 has a second surface 212 in the first direction z, and the second surface 212 is a surface of the second end wall 21 facing away from the first end wall 11. The second surface 212 may be regarded as a lower surface of the second end wall 21.

By "the end of the first side wall 12 that is away from the first end wall 11 does not extend beyond the second surface 212 in the direction from the first end wall 11 to the second end wall 21", it may be meant that the end of the first side wall 12 that is away from the first end wall 11 is flush with the second surface 212 or is positioned between the second surface 212 and the first end wall 11.

In the above solution, the end of the first side wall 12 that is away from the first end wall 11 does not extend beyond the second surface 212, so that a dimension of the battery 100 in the first direction z is controlled, ensuring that the battery 100 has a higher volumetric energy density.

In some embodiments, as shown in FIG. 3, the second direction x is a width direction of the battery 100. The battery 100 may be a prismatic battery 100, and the battery 100 may have a height direction, a width direction, and a length direction. The height direction of the battery 100 may be the first direction z, that is, the direction in which the first end wall 11 and the second end wall 21 are opposite each other. The width direction and the length direction of the battery 100 may be perpendicular to each other, and both perpendicular to the height direction. The dimension of the battery 100 in the length direction is generally larger than the dimension in the width direction. In some embodiments, a side face of the battery 100 in the width direction is a face of the battery 100 that has a larger area, that is, a larger face. The first case body 10 may be an upper case body of the battery 100. **In** the manufacturing process of the battery 100, the material cost and the density of the upper case body may be lower than those of the lower case body. For this reason, when the second direction x is defined as the width direction of the battery 100, the first side wall 12 may be regarded as the larger face (a face having a larger area) of the battery 100, so that the material cost of the battery 100 can be greatly saved to reduce the manufacturing cost of the battery 100, and the weight of the battery 100 can be greatly reduced to increase the gravimetric energy density of the battery 100.

According to some embodiments of the present application, the first case body 10 has a material density less than that of the second case body 20.

The material density is the mass per unit volume of a material in a specific volume state.

In the above solution, since the connection between the first side wall 12 and the first side face 210 enables the proportion of the first case body 10 in the battery 100 to be increased, and the material density of the first case body 10 is less than that of the second case body 20, the density of the battery 100 is reduced, and the weight of the battery 100 with the same volume is reduced, thereby increasing the gravimetric energy density of the battery.

In some other embodiments, the material density of the first case body 10 may alternatively be equal to or greater than the material density of the second case body 20.

According to some embodiments of the present application, the first case body 10 is made of a plastic material, and the second case body 20 is made of an aluminum alloy material.

The cost of plastic is lower than that of the aluminum alloy, and its density is less than that of the aluminum alloy. The structural strength and rigidity of the aluminum alloy are higher than those of plastic.

In the above solution, the first case body 10 may be an upper case body of the battery 100, the second case body 20 may be a lower case body of the battery 100, and the second case body 20 is made of an aluminum alloy material, so that the second case body 20 has an increased structural strength and rigidity, and has a strong protective effect on the battery cell. The first case body 10 serves as the upper case body to enclose the battery cell between the upper and lower case bodies. The first case body made of plastic can effectively reduce the manufacturing cost of the battery 100, and can effectively reduce the weight of the battery 100 to increase the gravimetric energy density of the battery 100.

In some other embodiments, the first case body 10 may alternatively be made of aluminum, aluminum alloy, steel, stainless steel or other materials. In some other embodiments, the second case body 20 may alternatively be made of plastic, aluminum, steel, stainless steel or other materials.

According to some embodiments of the present application, the battery 100 further comprises a first fastener (not shown) via which the first side wall 12 is connected to the first side face 210.

The first fastener is a connecting portion 14 member for connecting the first side wall 12 to the first side face 210. In some embodiments, the first fastener may be a rivet, a screw, a bolt, or other connecting members. In some other embodiments, the first fastener may alternatively be a bonding layer arranged between the first side wall 12 and the first side face 210.

In the above solution, the first fastener is provided for connecting the first side wall 12 to the first side face 210 to ensure the connection stability between the first side wall 12 and the first side face 210 and to ensure the structural stability of the battery 100.

According to some embodiments of the present application, referring to FIGS. 6 and 7, FIG. 7 is a partial schematic diagram of a first case body 10 according to some embodiments of the present application. The first side wall 12 is provided with a first through hole 120, the first side face 210 is provided with a first threaded hole 2100, and the first fastener passes through the first through hole 120 and is connected to the first threaded hole 2100.

The first through hole 120 may refer to a hole-like structure penetrating an outer surface and the inner surface of the first side wall 12. By "the first side face 210 is provided with a first threaded hole 2100", it may be meant that a hole-like structure having internal threads such as self-tapping threads is formed in the first side face 210; or that a threaded hole of a blind rivet nut or a threaded hole of a self-clinching nut is provided in the first side face 210. Referring to FIGS. 6 and 7, there may be a plurality of first through holes 120. The plurality of first through holes 120 are arranged at intervals in an extension direction of the first side wall 12 (the extension direction of the first side wall 12 is perpendicular to the first direction z and second direction x). There also may be a plurality of first threaded holes 2100, and the first threaded holes 2100 are arranged corresponding to the first through holes 120.

By "the first fastener passes through the first through hole 120 and is connected to the first threaded hole 2100", it may be meant that the first fastener has external threads that match the first threaded hole 2100, so as to enable threaded connection with the first threaded hole 2100.

In the above solution, the first fastener may be a connecting portion 14 member with external threads such as a bolt and a screw, which can be effectively connected in the first threaded hole 2100, so that there is a higher connection stability between the first side wall 12 and the first side face 210, and there is a good sealing between the first side wall 12 and the first side face 210.

According to some embodiments of the present application, as shown in FIG. 3, the battery 100 further includes a first sealing member 30. The first sealing member 30 is arranged between the first side wall 12 and the first side face 210.

The first sealing member 30 may be a component having sealing properties and arranged between the first side wall 12 and the first side face 210. In some embodiments, the first sealing member 30 may be a sealant or a sealing gasket, and the first sealing member 30 is clamped between the first side wall 12 and the first side face 210.

In the above solution, by arranging the first sealing member 30 before the first side wall 12 and the first side face 210, the sealing between the first side wall 12 and the first side face 210 can be improved, thereby improving the sealing performance of the battery 100.

According to some embodiments of the present application, as shown in FIGS. 3, 4 and 7, there are two first side walls 12, and the two first side walls 12 are arranged opposite to each other in the second direction x. The second end wall 21 is located between the two first side walls 12, and the second end wall 21 has two first side faces 210 arranged opposite to each other in the second direction x. The first side faces 210 correspond to the first side walls 12 on a one-to-one basis.

In some embodiments, there are two first side walls 12, and the two first side walls 12 are arranged opposite to each other in the second direction x, to correspond to the two first side faces 210 of the second end wall 21 that are arranged opposite to each other in the second direction x. By the second end wall 21 is located between the two first side walls 12, it can be understood that the outer contour of the battery 100 in the second direction x is defined by the two first side walls 12.

In the above solution, there are two first side walls 12, which are arranged opposite to each other in the second direction x and respectively connected to the corresponding first side faces 210, so that the space utilization of the battery 100 in the second direction x can be effectively improved, thereby increasing the volumetric energy density of the battery 100.

In some other embodiments, there may be one first side wall 12, and the one first side wall 12 can save the space on one side of the battery 100 in the second direction x.

According to some embodiments of the present application, as shown in FIG. 6, the second case body 20 further includes two second side walls 22. The two second side walls 22 are arranged opposite to each other in the second direction x and connected to the second end wall 21, and the battery cell is arranged between the two second side walls 22.

The second side wall 22 is a component arranged on the second end wall 21. The second side wall 22 may be arranged on the second end wall 21 by welding or bonding. The second end wall 21 has a first surface 211 facing the first end wall 11, and the second side wall 22 protrudes from the first surface 211 in the direction from the second end wall 21 to the first end wall 11.

In some embodiments, an outer surface of the second side wall 22 may be flush with the first side face 210.

In the above solution, two opposite second side walls 22 are arranged on the second end wall 21 in the second direction x, so that the structural strength of the second case body 20 can be improved, and a mounting region can be defined for the battery cells such that the battery cells are assembled in the second case body 20 in an orderly manner. Moreover, since the second side wall 22 protrudes from the surface of the second end wall 21, when the battery cell is bonded to the second case body 20 via an adhesive, the adhesive overflow space can be effectively controlled, and the risk of waste and environmental pollution caused by adhesive overflow can be reduced.

According to some embodiments of the present application, referring to FIGS. 4 and 7, openings 13 are respectively formed at two ends of the first case body 10 in a third direction y. Referring to FIG. 5, the second case body 20 further comprises two third side walls 23, the two third side walls 23 are arranged opposite to each other in the third direction y and connected to the second end wall 21, and the two third side walls 23 respectively close the two openings 13. The first direction z, the second direction x and the third direction y intersect with one another.

When the first direction z is defined as the height direction of the battery 100 and the second direction x is defined as the width direction of the battery 100, the third direction y may be defined as the length direction of the battery 100.

The third side walls 23 are components arranged on the second end wall 21. The third side walls 23 may be connected to the second end wall 21 by welding or bonding. The second end wall 21 has a first surface 211 facing the first end wall 11, and the third side walls 23 each protrude from the first surface 211 in the direction from the second end wall 21 to the first end wall 11. The third side walls 23 can provide the structural strength of the first case body 10. In some embodiments, components such as explosion-proof valves, water-cooled connectors or high- and low-voltage connectors may be mounted on the third side walls 23 to ensure normal charging and discharging operations of the battery 100.

The openings 13 respectively formed at the two ends of the first case body 10 in the third direction y may be notch-like portions corresponding to the third side walls 23, and the third side walls 23 can correspondingly close the openings 13 to prevent the generation of additional mutually interfering or overlapping portions in the battery 100, so as to improve the utilization rate of the manufacturing materials of the battery 100, ensuring that the battery 100 has a lower manufacturing cost. Moreover, the occurrence of waste of space caused by the generation of additional mutually interfering or overlapping portions in the battery 100 is also avoided. In some embodiments, the cross-sectional shape of the first case body 10 may be U-shaped.

In the above solution, by providing the third side walls 23, components such as explosion-proof valves, water-cooled connectors or high- and low-voltage connectors may be mounted on the third side walls 23 to ensure normal charging and discharging operations of the battery 100. In addition, compared with the arrangement of flange structures, which protrude in the third direction y, between the first case body 10 and the second case body 20, the arrangement of the third side walls 23 to close the openings 13 can improve the space utilization of the battery 100 in the third direction y, thereby increasing the volumetric energy density of the battery 100.

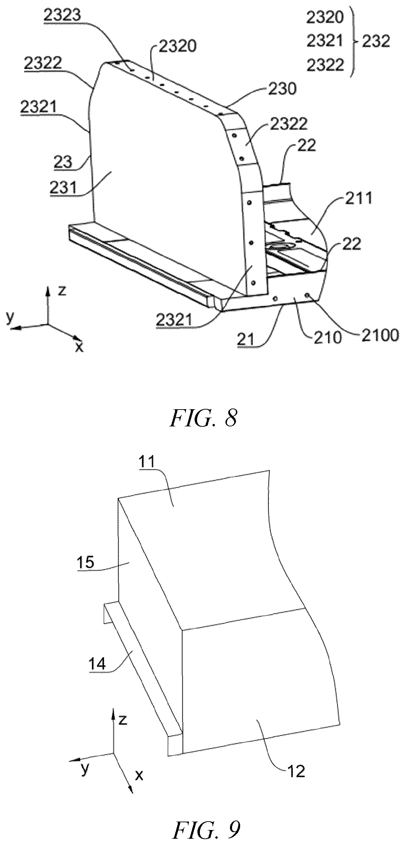

According to some embodiments of the present application, referring to FIGS. 7 and 8, FIG. 8 is a schematic diagram of a third side wall 23 according to some embodiments of the present application. The third side wall 23 comprise a third surface 230 facing the closed space, a fourth surface 231 facing away from the closed space, and a second side face 232 connected to the third surface 230 and the fourth surface 231. The first case body 10 comprises two connecting portions 14. The two connecting portions 14 are respectively located at the two ends of the first case body 10 in the third direction y, the connecting portions 14 surround the openings 13, and the connecting portions 14 are connected to the second side faces 232.

The third surface 230 may be an inner surface of the third side wall 23, the fourth surface 231 may be an outer surface of the third side wall 23, and the second side face 232 may be an outer peripheral face of the third side wall 23 between the inner surface and the outer surface. The outer peripheral face of the third side wall 23 may refer to an outer surface of the third side wall 23 in the first direction z and the second direction x.

The connecting portion 14 is a component located at an end portion of the first case body 10 in the third direction y, and surrounds the opening 13 of the first case body 10, and the contour of the connecting portion 14 conforms to the second side face 232 of the third side wall 23.

By "the connecting portions 14 are connected to the second side faces 232", it may be meant that in the third direction y, the first case body 10 and the second case body 20 are connected to each other by means of the connecting portions 14 and the second side faces 232.

Referring to FIG. 7, the connecting portions 14 may be in the form of a sheet that cooperates with the respective second side face 232. In some embodiments, the connection relationship between the connecting portions 14 and the second side faces 232 is face-to-face connection.

In the above solution, by providing the connecting portions 14 connected to the second side faces 232 of the third side walls 23, the connection stability and sealing between the first case body 10 and the second case body 20 can be improved.

According to some embodiments of the present application, referring to FIG. 8, the second side faces 232 each include a first flat face 2320, second flat faces 2321 and transition faces 2322. The first flat face 2320 is arranged at one end of the third side wall 23 that faces away from the second end wall 21, the two second flat faces 2321 are respectively arranged at two ends of the third side wall 23 in the second direction x, and the transition faces 2322 connect the first flat face 2320 to the second flat faces 2321, such that the first flat face 2320 smoothly transitions to the second flat faces 2321.

The first flat face 2320 may be an upper surface of the third side wall 23, which may be a flattened face. The second flat face 2321 may be an outer side face of the third side face, which may be a flattened face. In some embodiments, the first flat face 2320 and the second flat faces 2321 are perpendicular to each other. The transition faces 2322 are portions connected to the first flat face 2320 and the second flat faces 2321, and enable the first flat face 2320 to smoothly transition to the second flat faces 2321. Smooth transition may refer to the non-right-angle transition relationship between the first flat face 2320 and the second flat faces 2321.

In some embodiments, the transition faces 2322 may be arc-shaped faces or inclined faces.

In the above solution, the first flat face 2320 and the second flat faces 2321 are non-coplanar surfaces. For this reason, the provision of transition faces 2322 to allow the first flat face 2320 to smoothly transition to the second flat faces 2321 can contribute to forming good sealing faces between the connecting portions 14 and the second side faces 232, ensuring the sealing performance of the battery 100.

According to some embodiments of the present application, referring to FIG. 8, the second flat faces 2321 are flush with the first side faces 210.

By "the second flat faces 2321 are flush with the first side faces 210", it may be meant that the outer side face of the third side wall 23 in the second direction x is flush with the outer side of the second end wall 21 in the second direction x. That is, the face of the second case body 20 in the second direction x is a flattened face.

In the above solution, the second flat faces 2321 are flush with the first side faces 210, so that it is possible to reduce the risk of generating gaps between the first side walls 12 and the second side faces 232, and reduce the risk of generating gaps between the connecting portions 14 and the second flat faces 2321, thereby improving the sealing performance of the battery 100.

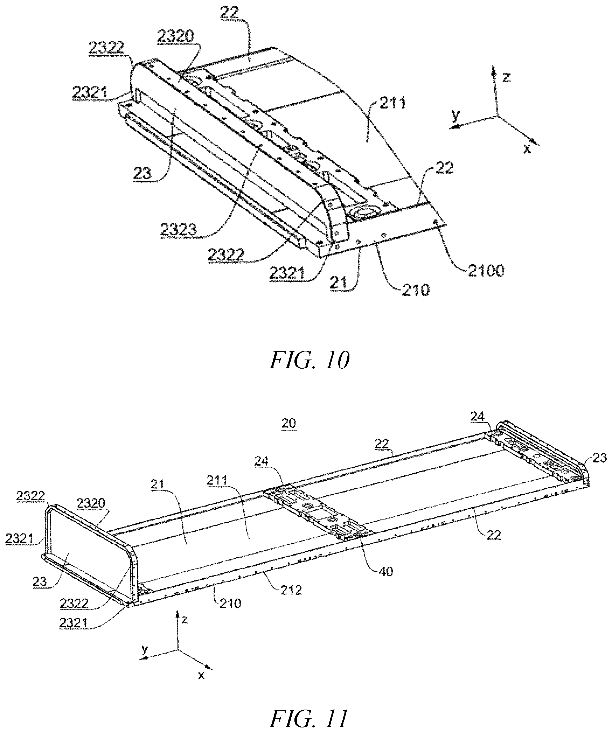

According to some other embodiments of the present application, referring to FIGS. 9 and 10, FIG. 9 is a partial schematic diagram of a first case body 10 according to some other embodiments of the present application, and FIG. 10 is a partial schematic diagram of a second case body 20 according to some other embodiments of the present application. The first case body 10 further includes a fourth side wall 15. The fourth side wall 15 is adjacent to the first side wall 12. One end of the fourth side wall 15 is connected to the first end wall 11, the respective connecting portion 14 is arranged at the other end of the fourth side wall 15, and the connecting portion 14 protrudes from the fourth side wall 15 in a direction facing away from the closed space.

The first end wall 11 has a lower surface facing the second end wall 21, and the fourth side wall 15 is a component protruding from the lower surface and adjacent to the first side wall 12. The fourth side wall 15 may be welded or bonded to the first end wall 11. When the first case body 10 has two first side walls 12 arranged opposite to each other in the second direction x, the fourth side wall 15 is located between the two first side walls 12. One end of the fourth side wall 15 is connected to the first end wall 11, and two opposite ends of the fourth side wall 15 in the second direction x are respectively connected to the two first side walls 12.

The connecting portion 14 may protrude from the fourth side wall 15 from the inside of the closed space to the outside of the closed space. The connecting portion 14 and the fourth side wall 15 may be integrally formed, or the connecting portion 14 may be connected to the fourth side wall 15 by welding or bonding.

In some embodiments, with reference to FIG. 10, by providing the fourth side wall 15, the dimension of the third side wall 23 in the first direction z can be reduced. That is, the larger the dimension of the fourth side wall 15 in the first direction z is, the smaller the dimension of the third side wall 23 in the first direction z can be.

In the above solution, the first case body 10 may be an upper case body, and the second case body 20 may be a lower case body. In the manufacturing process of the battery 100, the material cost and the density of the upper case body may be lower than those of the lower case body. For this reason, the fourth side wall 15 is provided to increase the proportion of the first case body 10 in the battery 100, thereby effectively reducing the manufacturing cost of the battery 100 and increasing the gravimetric energy density of the battery 100.

In some embodiments, the dimension of the fourth side wall 15 in the first direction z may be set larger, and components such as explosion-proof valves, water-cooled connectors or high- and low-voltage connectors may be mounted on the fourth side wall 15.

According to some embodiments of the present application, the battery 100 further includes second fasteners (not shown) via which the connecting portions 14 are connected to the second side faces 232.

The second fastener are connecting portion 14 members for connecting the second side faces to the connecting portions 14. In some embodiments, the second fasteners may be rivets, screws, bolts, or other connecting members. In some other embodiments, the second fasteners may alternatively be bonding layers arranged between the connecting portions 14 and the second side faces 232.

In the above solution, the second fasteners are provided to connect the second side faces 232 to the connecting portions 14 to improve the connection stability between the connecting portions 14 and the second side faces 232, thereby improving the structural stability of the battery 100.

According to some embodiments of the present application, as shown in FIGS. 7 and 8, the connecting portions 14 are each provided with a second through hole 140, the second side faces 232 are each provided with a second threaded hole 2323, and the second fasteners pass through the second through holes 140 and are connected to the second threaded holes 2323.

The second through holes 140 each may refer to a hole-like structure penetrating an outer surface and an inner surface of the respective connecting portion 14. By "the second side faces 232 are each provided with a second threaded hole 2323", it may be meant that a hole-like structure having internal threads such as self-tapping threads is formed in the second side face 232; or that a blind rivet nut or a self-clinching nut is provided on the second side face 232. Referring to FIGS. 7 and 8, there may be a plurality of second through holes 140. The plurality of second through holes 140 are arranged at intervals. There also may be a plurality of second threaded holes 2323, and the first threaded holes 2100 are arranged corresponding to the first through holes 120.

By "the second fasteners pass through the second through holes 140 and are connected to the second threaded holes 2323", it may be meant that the second fasteners each have external threads that match the respective second threaded hole 2323, so as to enable threaded connection with the second threaded hole 2323.

In the above solution, the second fasteners may be connecting portion 14 members with external threads such as bolts and screws, which can be effectively connected in the second threaded holes 2323, so that the connection stability between the connecting portions 14 and the second side faces 232 is improved, and there is a good sealing between the connecting portions 14 and the second side faces 232.

According to some embodiments of the present application, referring to FIG. 3, the battery 100 further comprises second sealing members 31. The second sealing members 31 are arranged between the connecting portions 14 and the second side faces 232.

The second sealing members 31 each may be a component having sealing properties and arranged between the connecting portion 14 and the second side face 232. In some embodiments, the second sealing members 31 each may be a sealant or a sealing gasket, and the second sealing member 31 is clamped between the first flat face 2320 and the connecting portion 14, between the second flat faces 2321 and the connecting portion 14, and between the transition faces 2322 and the connecting portion 14.

In the above solution, by arranging the second sealing members 31 between the connecting portions 14 and the second side faces 232, the sealing between the connecting portions 14 wall and the second side faces 232 can be improved, thereby improving the sealing performance of the battery 100.

According to some embodiments of the present application, referring to FIG. 3, the battery 100 further includes a first sealing member 30. The first sealing member 30 is arranged between the first side wall 12 and the first side face 210. Two ends of the first sealing member 30 are respectively connected to the two second sealing members 31.

In FIG. 3, the first sealing member 30 corresponds to the connecting portion 14 position between the first side face 210 and the first side wall 12, and may extend in the length direction of the battery 100; and the second sealing member 31 corresponds to the connecting portion 14 position between the second side face 232 and the connecting portion 14, and includes a part extending in the width direction of the battery 100, parts extending in the height direction of the battery 100, and parts corresponding to the transition faces 2322.

In some embodiments, the first sealing member 30 and the second sealing members 31 may be independent structures, and the first sealing member 30 and the second sealing members 31 are connected to each other by bonding or via intermediate connecting members. In some other embodiments, the first sealing member 30 and the second sealing members 31 may be of an integral structure.

In the above solution, the first sealing member 30 and the second sealing members 31 may be integrally formed or may be separately connected to each other. By providing the first sealing member 30 and the second sealing members 31, a good sealing can be achieved between the first case body 10 and the second case body 20, thereby improving the safety of the battery.

According to some other embodiments of the present application, referring to FIG. 11, FIG. 11 is a schematic diagram of a second case body 20 according to some other embodiments of the present application. A dimension of one of the third side walls 23 in the first direction z is less than a dimension of the other third side wall 23 in the first direction z.

The dimension of the third side wall 23 in the first direction z may be regarded as the height of the third side wall 23. By "a dimension of one of the third side walls 23 in the first direction z is less than a dimension of the other third side wall 23 in the first direction z", it may be meant that one of the third side walls 23 is higher than the other third side wall 23. Since the heights of the two third side walls 23 are different, the resulting height difference may be compensated by the first case body 10.

In the above solution, components such as explosion-proof valves, water-cooled connectors or high- and low-voltage connectors may be mounted on the third side wall 23 having a larger size to ensure normal charging and discharging operations of the battery 100. The size of the other third side wall 23 is reduced, so that it is possible to adaptively increase the size of a portion of the first case body 10 that corresponds to the third side wall 23, and increase the proportion of the first case body 10 in the battery 100 (in this embodiment, the first case body 10 may be an upper case body having a relatively low material cost and density), thereby reducing the manufacturing cost of the battery 100 and increasing the gravimetric energy density of the battery 100.

According to some embodiments of the present application, as shown in FIGS. 3 and 5, the second end wall 21 is provided with a securing portion 40 for securing the battery 100 to a power consuming device.

The securing portion 40 is a component arranged on the second end wall 21 and configured to secure the battery 100 to the power consuming device. The securing portion 40 may be a connecting structure such as a nut or a connecting bracket arranged on the second end wall 21. In some embodiments, there may be a plurality of securing portions 40, which may be arranged in an array in the third direction y and the second direction x. In some embodiments, the securing portion 40 may be an M8, M10, M12, or M16 threaded hole structure provided in the second end wall 21.

In the above solution, the securing portion 40 is provided on the second end wall 21 to implement stable assembly of the battery 100, ensuring that the battery 100 supplies electric energy.

According to some embodiments of the present application, a power consuming device is also provided, including a battery 100 as described above. The battery 100 is configured to provide electric energy. In some embodiments, the power consuming device may be a vehicle. The type of vehicle may be a heavy truck or a bus.

According to some embodiments of the present application, the present application also provides a battery 100, referring to FIGS. 3-8. The battery 100 includes a first case body 10, a second case body 20 and a battery cell. The first case body 10 is an upper case body of the battery 100, and the second case body 20 is a lower case body of the battery 100. The second case body 20 and the first case body 10 are connected to each other to jointly enclose a closed space, and the battery cell is arranged in the closed space. The first case body 10 includes a first end wall 11, two first side walls 12 and two connecting portions 14. The first end wall 11 may be a top wall of the battery 100, and the two first side walls 12 are arranged opposite to each other in a second direction x (a width direction of the battery 100) and on the first end wall 11. The two connecting portions 14 are respectively located at two ends of the first case body 10 in a third direction y (a length direction of the battery 100), and the connecting portions 14 surround openings 13. The second case body 20 includes a second end wall 21 and two second side walls 22. The second end wall 21 may be a bottom wall of the battery 100. The second end wall 21 has two first surfaces 211 arranged opposite to each other in the second direction x. The second end wall 21 may be provided with a crossbeam 24. There may be a plurality of crossbeams 24. The plurality of crossbeams 24 are arranged at intervals in the third direction y. The crossbeams 24 can function to improve the structural strength of the second case body 20, and the battery cell may also be connected to the crossbeams 24. The two second side walls 22 are arranged opposite to each other in the third direction y (the length direction of the battery 100) and on the second end wall 21. The second side walls 22 each have a first flat face 2320 facing the first end wall 11, two second flat faces 2321 arranged opposite to each other in the second direction x, and transition faces 2322 connected to the first flat face 2320 and the second flat faces 2321.

The first end wall 11 and the second end wall 21 are arranged opposite to each other in a first direction z (a height direction of the battery 100). An inner surface of each first side wall 12 is connected to a first side face 210, a first sealing member 30 is provided between the first side wall 12 and the first side face 210, and the first side wall 12 is connected to the second side face 232 via a first fastener. The second side walls 22 correspond to the connecting portions 14. A second sealing member 31 is provided between each second side wall 22 and the respective connecting portion 14, and the first flat face 2320, the second flat faces 2321 and the transition faces 2322 are all connected to the connecting portion 14 via second fasteners.

A securing portion 40 for securing the battery 100 to a power consuming device (such as a heavy truck or a bus) is provided on the crossbeam 24.

The foregoing descriptions are merely preferred embodiments of the present application, but are not intended to limit the present application. For those skilled in the art, the present application may have various modifications and variations. Any modifications, equivalent substitutions, improvements and the like made within the spirit and principle of the present application should fall within the scope of protection of the present application.

## Claims

1. A battery, comprising:
a battery cell;
a first case body comprising a first end wall and a first side wall; and
a second case body, the second case body and the first case body being connected to each other to jointly enclose a closed space for receiving the battery cell, the second case body comprising a second end wall, the second end wall being arranged opposite to the first end wall in a first direction, the second end wall having a first side face in a second direction, and the first direction intersecting with the second direction;
wherein the first side wall has one end connected to the first end wall and the other end connected to the first side face.

2. The battery according to claim 1, wherein
an inner surface of the first side wall is connected to the first side face.

3. The battery according to claim 1 or 2, wherein
the second end wall has a first surface facing the first end wall, and one end of the first side wall that is away from the first end wall extends beyond the first surface in a direction from the first end wall to the second end wall.

4. The battery according to any one of claims 1-3, wherein
the second end wall has a second surface facing away from the first end wall, and the end of the first side wall that is away from the first end wall does not extend beyond the second surface in the direction from the first end wall to the second end wall.

5. The battery according to any one of claims 1-4, wherein
the first case body has a material density less than that of the second case body.

6. The battery according to claim 5, wherein
the first case body is made of a plastic material, and the second case body is made of an aluminum alloy material.

7. The battery according to any one of claims 1-6, wherein
the battery further comprises a first fastener via which the first side wall is connected to the first side face.

8. The battery according to claim 7, wherein
the first side wall is provided with a first through hole, the first side face is provided with a first threaded hole, and the first fastener passes through the first through hole and is connected to the first threaded hole.

9. The battery according to any one of claims 1-8, wherein
the battery further comprises a first sealing member arranged between the first side wall and the first side face.

10. The battery according to any one of claims 1-9, wherein
there are two first side walls, which are arranged opposite to each other in the second direction; the second end wall is located between the two first side walls, and the second end wall has two first side faces arranged opposite to each other in the second direction; and the first side faces correspond to the first side walls on a one-to-one basis.

11. The battery according to any one of claims 1-10, wherein
the second case body further comprises two second side walls, the two second side walls are arranged opposite to each other in the second direction and connected to the second end wall, and the battery cell is arranged between the two second side walls.

12. The battery according to any one of claims 1-11, wherein
openings are respectively formed at two ends of the first case body in a third direction;
the second case body further comprises two third side walls, the two third side walls are arranged opposite to each other in the third direction and connected to the second end wall, and the two third side walls respectively close the two openings; and
the first direction, the second direction and the third direction intersect with one another.

13. The battery according to claim 12, wherein
the third side walls each comprise a third surface facing the closed space, a fourth surface facing away from the closed space, and a second side face connected to the third surface and the fourth surface; and
the first case body comprises two connecting portions respectively located at the two ends of the first case body in the third direction, the connecting portions surround the openings, and the connecting portions are connected to the second side faces.

14. The battery according to claim 13, wherein
the second side faces each comprises a first flat face, second flat faces and transition faces, wherein the first flat face is arranged at one end of the third side wall that faces away from the second end wall, the two second flat faces are respectively arranged at two ends of the third side wall in the second direction, and the transition faces connect the first flat face to the second flat faces, such that the first flat face smoothly transitions to the second flat faces.

15. The battery according to claim 14, wherein
the second flat faces are flush with the first side faces.

16. The battery according to any one of claims 13-15, wherein
the first case body further comprises a fourth side wall adjacent to the first side wall; and
one end of the fourth side wall is connected to the first end wall, the respective connecting portion is arranged at the other end of the fourth side wall, and the connecting portion protrudes from fourth side wall in a direction facing away from the closed space.

17. The battery according to any one of claims 13-16, wherein
the battery further comprises second fasteners via which the connecting portions are connected to the second side faces.

18. The battery according to claim 17, wherein
the connecting portions are each provided with a second through hole, the second side faces are each provided with a second threaded hole, and the second fasteners pass through the second through holes and are connected to the second threaded holes.

19. The battery according to any one of claims 13-18, wherein
the battery further comprises second sealing members arranged between the connecting portions and the second side faces.

20. The battery according to claim 19, wherein
the battery further comprises a first sealing member arranged between the first side wall and the first side face;
wherein two ends of the first sealing member are respectively connected to the two second sealing members.

21. The battery according to any one of claims 12-20, wherein
a dimension of one of the third side walls in the first direction is less than a dimension of the other third side wall in the first direction.

22. The battery according to any one of claims 1-21, wherein
the second end wall is provided with a securing portion for securing the battery to a power consuming device.

23. A power consuming device, comprising a battery according to any one of claims 1-22, the battery being configured to supply electric energy.
